# EUROPÄISCHE PATENTANMELDUNG

(11) **EP 2 796 631 A2**
(43) Veröffentlichungstag der Anmeldung: **29.10.2014**
(21) Anmeldenummer: 14165539.9
(22) Anmeldetag: 23.04.2014
(51) Int. Cl.: E04B 1/41, H02G 3/08, H02G 3/12, H02G 3/14

(54) **System und Verfahren zum putz- oder fliesenbündigen Einbau eines Einbauteils in ein Rohbauteil**

(30) Priorität: 23.04.2013 DE 202013101726 U
(71) Anmelder: Pauser, Stefan, 73525 Schwäbisch Gmünd (DE)
(72) Erfinder: Pauser, Stefan, 73525 Schwäbisch Gmünd (DE)
(74) Vertreter: Hoeger, Stellrecht & Partner Patentanwälte

(57) **Zusammenfassung**

Um auf einfache Weise einen putz- oder fliesenbündigen Einbau eines Einbauteils in ein Rohbauteil zu ermöglichen, wird ein System zum putz- oder fliesenbündigen Einbau eines Einbauteils in ein Rohbauteil vorgeschlagen, umfassend eine Montageeinrichtung zum definierten Positionieren einer Abstandshalteeinrichtung, welche Montageeinrichtung mindestens teilweise in das Rohbauteil einführbar ist, welche Abstandshalteeinrichtung ausgebildet ist zum putz- oder fliesenbündigen Positionieren einer Vorderseite des Einbauteils, welche Abstandshalteeinrichtung eine Abstandshalteeinrichtungsdurchbrechung aufweist, durch welche die Montageeinrichtung formschlüssig oder im Wesentlichen formschlüssig durchführbar ist.

Ferner wird ein Verfahren zum putz- oder fliesenbündigen Einbau eines Einbauteils in ein in eine Ausnehmung einer Gebäudewand oder eines -bodens eingesetztes Rohbauteil vorgeschlagen.

## Beschreibung

Die vorliegende Erfindung betrifft ein System zum putz- oder fliesenbündigen Einbau eines Einbauteils in ein Rohbauteil.

Ferner betrifft die vorliegende Erfindung ein Verfahren zum putz- oder fliesenbündigen Einbau eines Einbauteils in eine Ausnehmung einer Gebäudewand oder eines -bodens eingesetztes Rohbauteil.

Einbauteile, also zum Beispiel Fertigbauteile in Form von in dafür vorgesehenen Gehäusen eingesetzte Schaltern, Leuchten, Düsen oder dergleichen, werden häufig in Bädern oder Schwimmbädern verbaut. Sie werden dichtend in ein in einer Gebäudewand eingesetztes Rohbauteil, welches beispielsweise in Form eines Einsatzes ausgebildet ist, eingesetzt. In der Regel wird die Gebäudewand, in die das Rohbauteil eingesetzt ist, gefliest, also mit Fliesen, insbesondere keramischen Fliesen, verkleidet. Zur Klarstellung sei angemerkt, dass die gesamte Anmeldung, auch wenn nur von Gebäudewänden die Rede ist, sich ausdrücklich auf alle Arten von Gebäudeteilen, also insbesondere auch Gebäudeböden und -decken bezieht, in denen Rohbauteile eingesetzt und die mit Fliesen oder dergleichen verkleidet oder verputzt werden.

Ein Problem bei der Montage derartiger Einbauteile ist es, diese letztendlich putz- oder fliesenbündig, das heißt mit ihrer Vorderfront in einer durch Putz oder die Fliesen definierten Ebene, zu positionieren. Dieses Problem tritt dadurch auf, dass das Rohbauteil, beispielsweise ein Einbautopf, im Rohbeton der Gebäudewand oder dergleichen sitzt, und das Einbauteil, also der zweite Teil, dann wie beschrieben so einzubauen ist, dass dessen Oberfläche nach Abschluss der Fliesenarbeiten bündig mit der Oberfläche der Fliesen sitzt.

Es ist daher eine Aufgabe der vorliegenden Erfindung, ein System und ein Verfahren bereitzustellen, welche auf einfache Weise einen putz- oder fliesenbündigen Einbau eines Einbauteils in ein Rohbauteil gestatten.

Diese Aufgabe wird erfindungsgemäß durch ein System zum putz- oder fliesenbündigen Einbau eines Einbauteils in ein Rohbauteil gelöst, umfassend eine Montageeinrichtung zum definierten Positionieren einer Abstandshalteeinrichtung, welche Montageeinrichtung mindestens teilweise in das Rohbauteil einführbar ist, welche Abstandshalteeinrichtung ausgebildet ist, zum putz- oder fliesenbündigen Positionieren einer Vorderseite des Einbauteils, welche Abstandshalteeinrichtung eine Abstandshalteeinrichtungsdurchbrechung aufweist, durch welche die Montageeinrichtung formschlüssig oder im Wesentlichen formschlüssig durchführbar ist.

Das erfindungsgemäße System umfasst somit insbesondere zwei Teile, nämlich die Abstandshalteeinrichtung und die Montageeinrichtung, wobei auf die Montageeinrichtung optional auch verzichtet werden kann. In jedem Fall bildet die Abstandshalteeinrichtung einen Teil des Systems, welche Abstandshalteeinrichtung beispielsweise auf einer Gebäudewand, in die das Rohbauteil eingesetzt ist, so angebracht wird, dass das Einbauteil durch die Abstandshalteeinrichtungsdurchbrechung hindurch in das Rohbauteil eingeführt werden kann, und zwar genau und möglichst nur so weit, dass eine vordere Oberfläche des Einbauteils mit einem die Abstandshalteeinrichtung umgebenden Belag der Gebäudewand, beispielsweise Fliesen, bündig abschließt, also fliesenbündig ist. So entsteht eine im Wesentlichen vollständig ebene Oberfläche der Gebäudewand oder eines Bodens. Die optional vorgesehene Montageeinrichtung erleichtert insbesondere Positionierung und Ausrichtung der Abstandshalteeinrichtung relativ zum Rohbauteil. Sie dient insbesondere als Führung, zum Beispiel zur Zentrierung, der Abstandshalteeinrichtung relativ zum Rohbauteil. Dies wird auf einfache Weise dadurch erreicht, dass die Montageeinrichtung mindestens teilweise in das Rohbauteil einführbar ist. Die Abstandshalteeinrichtung kann dann quasi über die Montageeinrichtung und auf dieser geführt und dann beispielsweise an einer Gebäudewand oder einem -boden in der gewünschten Position relativ zum Rohbauteil befestigt werden, beispielsweise geklebt. Insbesondere durch eine bevorzugte Bemaßung der Abstandshalteeinrichtung in Abhängigkeit des einzusetzenden Einbauteils kann so die putz- oder fliesenbündige Positionierung des Einbauteils auf einfache Weise und ohne aufwändiges Messen beim Einbau erreicht werden.

Günstig ist es, wenn die Montageeinrichtung einen Einführabschnitt zum Einführen in das Rohbauteil und einen Führungsabschnitt für die Abstandshalteeinrichtung aufweist. Der Einführabschnitt kann insbesondere an das Rohbauteil angepasst sein. Insbesondere kann er zylindrisch ausgebildet sein und klemmend mittels am Rohbauteil angeordneten oder gehaltenen Dichtungen in dieses eingesetzt werden. Insbesondere ist es auch möglich, die Montageeinrichtung quasi als Verschlusselement für das Rohbauteil zu nutzen. Beispielsweise kann ein wannenförmiger Schwimmbadkörper aus Beton hergestellt und in diesen ein oder mehrere Rohbauteile eingesetzt werden. Beispielsweise um eine Dichtigkeit des Beckens zu prüfen, kann dann bereits die Montageeinrichtung eingesetzt werden, die wie beschrieben das Rohbauteil optional dichtend verschließen kann. Alternativ ist es auch denkbar, wenn am Rohbauteil ein Innengewinde vorgesehen ist, eine Montageeinrichtung so auszubilden, dass der Einführabschnitt mit einem zum Innengewinde des Rohbauteils korrespondieren Außengewinde versehen ist, so dass die Montageeinrichtung in das Rohbauteil eingeschraubt werden kann. Der Führungsabschnitt der Montageeinrichtung dient dann zum Führen und Positionieren der Abstandshalteeinrichtung, und zwar indem die Abstandshalteeinrichtung über den Führungsabschnitt der Montageeinrichtung geschoben wird.

Ferner ist es günstig, wenn der Einführabschnitt ausgebildet ist zum Verschließen des Rohbauteils. Insbesondere kann er zum dichtenden Verschließen des Rohbauteils ausgebildet sein. Hierfür kann am Einführabschnitt mindestens ein Dichtelement, beispielsweise in Form eines Dichtrings vorgesehen sein. Alternativ kann auch mindestens ein Dichtring am Rohbauteil vorgesehen sein. Besonders einfach herstellen lässt sich das System, wenn der Einführabschnitt und/oder der Führungsabschnitt einen kreisförmigen oder im Wesentlichen kreisförmigen Querschnitt aufweisen. Insbesondere ist es so möglich, die Montageeinrichtung als Drehteil auszubilden. Insbesondere kann es vollständig rotationssymmetrisch ausgebildet sein. Dies hat den Vorteil, dass es beim Einsetzen in das Rohbauteil nicht auf eine Orientierung der Montageeinrichtung ankommt. Denkbar ist es auch, die Montageeinrichtung als Spritzgussteil auszubilden, beispielsweise aus einem Kunststoff.

Vorzugsweise weist der Führungsabschnitt einen größeren Querschnitt auf als der Einführabschnitt. Auf diese Weise kann insbesondere verhindert werden, dass die Montageeinrichtung zu weit in das Rohbauteil eingeführt werden kann. Insbesondere ist es vorteilhaft, wenn am Übergang zwischen dem Einführabschnitt und dem Führungsabschnitt ein Anschlag, beispielsweise eine in Richtung auf das Rohbauteil weisende Anschlagfläche, ausgebildet ist.

Die Herstellung der Montageeinrichtung lässt sich weiter vereinfachen, wenn Längsachsen des Einführabschnitts und des Führungsabschnitts zusammenfallen. Insbesondere ist es so möglich, die Montageeinrichtung als rotationssymmetrisches Bauteil, beispielsweise in Form eines rotationssymmetrisch ausgebildeten Stopfens, auszubilden.

Um die in das Rohbauteil eingesetzte Montageeinrichtung auf einfache Weise wieder entfernen zu können, ist es günstig, wenn die Montageeinrichtung eine Werkzeugelementaufnahme umfasst zum in Eingriff bringen mit einem Entnahmewerkzeug. Insbesondere wenn am Rohbauteil zwei oder mehr Dichtelemente vorgesehen sind, kann es, je nach Größe des Führungsabschnitts, praktisch unmöglich sein, die Montageeinrichtung aufgrund der wirkenden Reibungskräfte nur mit der Hand wieder aus dem Rohbauteil herauszuziehen. In diesem Fall erleichtert die Werkzeugelementaufnahme das Entfernen der Montageeinrichtung vom Rohbauteil.

Günstigerweise ist die Werkzeugelementaufnahme in Form einer Ausnehmung oder Durchbrechung ausgebildet. Eine solche Werkzeugelementaufnahme lässt sich auf besonders einfache Weise herstellen, beispielsweise in Form einer Durchgangsbohrung oder eines Sacklochs.

Auf besonders einfache Weise lässt sich die Werkzeugelementaufnahme mit einem Entnahmewerkzeug in Eingriff bringen, wenn die Montageeinrichtung teilweise in das Rohbauteil eingeführt ist, wenn die Werkzeugelementaufnahme am Führungsabschnitt angeordnet oder ausgebildet ist.

Günstig ist es, wenn die Werkzeugelementaufnahme eine Längsachse definiert, die quer, insbesondere senkrecht, zur Längsachse des Führungsabschnitts verläuft. So können beispielsweise ein Entnahmewerkzeug oder ein Vorsprung desselben quer zur Längsachse der Montageeinrichtung in die Werkzeugelementaufnahme eingeführt werden, um die Montageeinrichtung auf einfache Weise aus dem Rohbauteil herauszuziehen oder gegebenenfalls herauszuschrauben.

Eine besonders gute Führung der Abstandshalteeinrichtung durch die Montageeinrichtung kann insbesondere dadurch erreicht werden, dass die Abstandshalteeinrichtungsdurchbrechung eine Innenkontur aufweist, die der Außenkontur des Führungsabschnitts entspricht.

Insbesondere wenn der Führungsabschnitt und die Abstandshalteeinrichtungsdurchbrechung einen kreisförmigen Querschnitt aufweisen, ist es vorteilhaft, wenn der Führungsabschnitt einen Außendurchmesser aufweist, der einem Innendurchmesser der Abstandshalteeinrichtungsdurchbrechung entspricht. Vorzugsweise sind der Außendurchmesser und der Innendurchmesser so bemessen, dass noch hinreichend Spiel bleibt, um die Abstandshalteeinrichtung verkantungsfrei über die Montageeinrichtung zu schieben beziehungsweise zu führen.

Gemäß einer weiteren bevorzugten Ausführungsform der Erfindung kann vorgesehen sein, dass die Abstandshalteeinrichtung einen Grundkörper umfasst, welcher eine Vorderseite und eine Rückseite aufweist, dass die Abstandshalteeinrichtungsdurchbrechung sich durch den Grundkörper hindurch von der Vorderseite zur Rückseite erstreckt und dass ausgehend von der Vorderseite im Grundkörper eine Einbauteilaufnahme ausgebildet ist, welche eine Tiefe in Richtung auf die Rückseite hin aufweist, die kleiner ist als ein Abstand zwischen der Vorderseite und der Rückseite. Eine solche Ausgestaltung der Abstandshalteeinrichtung ermöglicht es insbesondere, quasi durch die Vorgabe der Tiefe der Einbauteilaufnahme eine Einbautiefe für das Einbauteil vorzugeben. Mit anderen Worten kann die Einbauteilaufnahme, insbesondere eine Bodenfläche derselben, als Anschlag für das Einbauteil dienen, um dieses dann so zu positionieren, dass dessen Vorderseite oder Front bündig mit den das Einbauteil umgebenden Oberflächen der Fliesen ist.

Günstigerweise ist der Grundkörper scheibenförmig oder quaderförmig ausgebildet. Auf diese Weise kann er dann insbesondere in einer Größe vorgesehen werden, die zu den Fliesen passt.

Vorteilhaft ist es, wenn sich die Einbauteilaufnahme mindestens abschnittsweise seitlich über die Abstandshalteeinrichtungsdurchbrechung hinaus in den Grundkörper erstreckt. Auf diese Weise wird eine Boden- oder Grundfläche der Einbauteilaufnahme ausgebildet, die die Abstandshalteeinrichtungsdurchbrechung insbesondere ringförmig umgeben und so einen Anschlag für das Einbauteil oder mindestens einen an diesem ausgebildeten Vorsprung, beispielsweise einen Ringflansch, dienen kann.

Vorzugsweise weist die Einbauteilaufnahme eine Querschnittsfläche auf, welche einer Querschnittsfläche der Abstandshalteeinrichtungsdurchbrechung geometrisch ähnlich ist. So ist es insbesondere möglich, Einbauteile mit entsprechend zueinander geometrisch ähnlichen Abschnitten unter Verwendung der Abstandshalteeinrichtung putz- oder fliesenbündig einzubauen.

Um nach Möglichkeit eine koaxiale Positionierung des Einbauteils relativ zur Abstandshalteeinrichtung zu ermöglichen, ist es günstig, wenn die Einbauteilaufnahme und die Abstandshalteeinrichtungsdurchbrechung koaxial zueinander ausgerichtet sind.

Gemäß einer weiteren bevorzugten Ausführungsform der Erfindung kann das System ferner ein Einbauteil umfassen, welches einen Einbauteileinführabschnitt zum Einführen in ein Rohbauteil und einen Einbauteilanschlagabschnitt aufweist, welcher Einbauteilanschlagabschnitt mindestens abschnittsweise seitlich über den Einbauteileinführabschnitt vorsteht. Ein derart ausgebildetes Einbauteil kann dann beispielsweise mit dem Einbauteileinführabschnitt durch die Abstandshalteeinrichtungsdurchbrechung hindurch in das Rohbauteil eingeführt werden, wobei dann der Einbauteilanschlagabschnitt in die Einbauteilaufnahme eintauchen und optional an dieser anschlagen kann.

Um einen putz- oder fliesenbündigen Einbau des Einbauteils im Zusammenwirken mit dem Rohbauteil zu erreichen, ist es günstig, wenn eine Vorderseite des Einbauteilanschlagabschnitts nicht über die Vorderseite des Grundkörpers vorsteht, wenn eine von der Vorderseite weg in entgegengesetzter Richtung weisende Anschlagfläche des Einbauteilanschlagabschnitts an einer Bodenfläche der Einbauteilaufnahme anliegt, welche in Richtung auf die Anschlagfläche hin weist. Ist die Abstandshalteeinrichtung relativ zum Rohbauteil in gewünschter Weise positioniert und befestigt, lässt sich der putz- oder fliesenbündige Einbau des Einbauteils auf einfache Weise insbesondere dadurch realisieren, dass das Einbauteil mit seinem Einbauteileinführabschnitt durch die Abstandshalteeinrichtungsdurchbrechung hindurch in das Rohbauteil eingeführt wird, und zwar so weit, bis der Einbauteilanschlagabschnitt an der Bodenfläche in Anlage kommt.

Eine putz- oder fliesenbündige Positionierung des Einbauteils lässt sich auf einfache Weise insbesondere dadurch realisieren, dass der Einbauteilanschlagabschnitt einen in radialer Richtung über den Einbauteileinführabschnitt vorstehenden Flansch umfasst. Mit anderen Worten kann der Einbauteilanschlagabschnitt insbesondere in Form eines Kopfes, beispielsweise eines scheibenförmigen Kopfes, des Einbauteils ausgebildet sein, der dann beim Einsetzen in das Rohbauteil in die Einbauteilaufnahme eintaucht.

Um insbesondere sicherzustellen, dass das Einbauteil nicht über eine von den das Einbauteil nach dessen Montage umgebende Fliesen vorsteht, ist es vorteilhaft, wenn der Einbauteilanschlagabschnitt ein erstes Ende des Einbauteils bildet und/oder wenn der Einführabschnitt ein zweites Ende des Einbauteils bildet.

Vorzugsweise weist der Einbauteilanschlagabschnitt eine Dicke parallel zu einer Einbauteillängsachse des Einbauteils auf, welche einer Tiefe der Einbauteilaufnahme entspricht. Durch diese Ausgestaltung kann insbesondere erreicht werden, dass eine Vorderseite des Einbauteils nach vollständigem Einführen des Einbauteilanschlagabschnitts in die Einbauteilaufnahme bündig mit der Vorderseite des Grundkörpers ausgerichtet ist.

Auf besonders einfache und kostengünstige Weise, insbesondere auch unter Berücksichtigung ästhetischer Gesichtspunkte, lässt sich die Abstandshalteeinrichtung herstellen, wenn sie aus einem Kunststoff, aus einem Metall, insbesondere einem nichtrostenden Stahl, oder aus einer Keramik hergestellt ist. Insbesondere kann die Abstandshalteeinrichtung quasi selbst als Fliese ausgebildet sein, die sich dann vollständig in das Gesamtbild einer mit Fliesen verkleideten Wand oder eines Bodens einfügt.

Die eingangs gestellte Aufgabe wird ferner erfindungsgemäß gelöst durch ein Verfahren zum putz- oder fliesenbündigen Anbau eines Einbauteils in ein in eine Ausnehmung einer Gebäudewand oder eines -bodens eingesetztes Rohbauteil, bei welchem Verfahren eine Montageeinrichtung mindestens teilweise in das Rohbauteil eingesetzt wird, wobei ferner eine Abstandshalteeinrichtung bereitgestellt wird, welche eine Abstandshalteeinrichtungsdurchbrechung aufweist, welche durch die Montageeinrichtung formschlüssig oder im Wesentlichen formschlüssig durchführbar ist, wobei die Abstandshalteeinrichtung nach dem mindestens teilweisen Einsetzen der Montageeinrichtung in das Rohbauteil über die Montageeinrichtung an die das Rohbauteil umgebende Gebäudewand beziehungsweise den -boden herangeführt und an dieser beziehungsweise diesem befestigt wird.

Das erfindungsgemäß vorgeschlagene Verfahren ermöglicht es auf einfache Weise, ein Einbauteil in Rohbauteil, welches in einer Gebäudewand oder einem Gebäudeboden eingebaut ist, so einzusetzen, dass eine Vorderseite desselben insbesondere bündig mit das Einbauteil umgebenden Fliesen oder einer Putzoberfläche ausgerichtet ist. Voraussetzung für die gewünschte Positionierung des Einbauteils ist lediglich die entsprechende Positionierung der Abstandshalteeinrichtung relativ zum Rohbauteil. Ist die Abstandshalteeinrichtung korrekt relativ zum Rohbauteil platziert, kann das Einbauteil einfach eingesetzt werden, insbesondere ohne zusätzliche Werkzeuge, wobei so der gewünschte putz- oder fliesenbündige Einbau erreicht werden kann.

Vorzugsweise werden die Abstandshalteeinrichtung umgebend Putz oder Fliesen an der Gebäudewand angebracht. Auf diese Weise kann in Verbindung mit der Abstandshalteeinrichtung und dem montierten Einbauteil eine ebene Wandfläche beziehungsweise eine ebene Bodenfläche hergestellt werden.

Günstigerweise werden die Fliesen nach dem Anbringen an der Gebäudewand verfugt. Insbesondere kann auch eine zwischen der Abstandshalteeinrichtung und den diese umgebenden Fliesen ausgebildete Fuge mit Fugenmaterial verfugt werden, um so die Abstandshalteeinrichtung vollständig in ein durch die Fliesen definiertes Fliesenbild zu integrieren.

Vorteilhaft ist es, wenn nach dem Befestigen der Abstandshalteeinrichtung an der Gebäudewand die Montageeinrichtung entfernt und das Einbauteil durch die Abstandshalteeinrichtungsdurchbrechung in das Rohbauteil eingeführt wird. Die Montageeinrichtung, die als Führungs- beziehungsweise Zentrierelement für die Abstandshalteeinrichtung dient, optional auch das Rohbauteil verschließt, insbesondere dichtend, wird also entfernt, bevor das Einbauteil eingesetzt wird.

Günstig ist es, wenn ein Verschlussteil verwendet wird, welches einen Einführabschnitt zum Einführen in das Rohbauteil und einen Führungsabschnitt für die Abstandshalteeinrichtung aufweist. Sowohl der Einführabschnitt als auch der Führungsabschnitt können jeweils an andere Bauteile angepasst sein, und zwar einerseits an das Rohbauteil und andererseits an die Abstandshalteeinrichtung, um diese in gewünschter Weise an das Rohbauteil heranführen und positionieren zu können.

Besonders einfach durchführbar wird das Verfahren, wenn eine Montageeinrichtung verwendet wird, deren Einführabschnitt und/oder deren Führungsabschnitt einen kreisförmigen oder im Wesentlichen kreisförmigen Querschnitt aufweist. Dies ermöglicht es insbesondere, die Abstandshalteeinrichtung in einer beliebigen Orientierung, also Drehstellung bezogen auf eine Längsachse des Systems, über den Führungsabschnitt an das Rohbauteil heranzuführen. Ebenso kann die Montageeinrichtung praktisch in einer beliebigen Orientierung mit dem Einführabschnitt in das Rohbauteil eingeführt werden.

Um das Entfernen der Montageeinrichtung vom Rohbauteil zu erleichtern, ist es vorteilhaft, wenn eine Montageeinrichtung mit einer Werkzeugelementaufnahme zum in Eingriff Bringen mit einem Entnahmewerkzeug verwendet wird. Insbesondere wenn große Zugkräfte erforderlich sind, um die Montageeinrichtung aus dem Rohbauteil zu entfernen, kann dieser Verfahrensschritt erleichtert werden durch Verwenden eines Entnahmewerkzeugs, welches mit der Werkzeugelementaufnahme zusammen wirkt.

Auf besonders einfache Weise und mit besonders einfachen Werkzeugen lässt sich die Montageeinrichtung vom Rohbauteil entfernen, wenn eine Montageeinrichtung mit einer Werkzeugelementaufnahme in Form einer Ausnehmung oder Durchbrechung verwendet wird.

Besonders gut lässt sich auf die Werkzeugelementaufnahme zugreifen und diese mit einem Entnahmewerkzeug in Eingriff bringen, wenn eine Montageeinrichtung mit einer am Führungsabschnitt angeordneten oder ausgebildeten Werkzeugelementaufnahme verwendet wird.

Gemäß einer weiteren bevorzugten Variante des Verfahrens kann vorgesehen sein, dass eine Abstandshalteeinrichtung mit einem Grundkörper verwendet wird, welcher eine Vorderseite und eine Rückseite aufweist, dass die Abstandshalteeinrichtungsdurchbrechung sich durch den Grundkörper hindurch von der Vorderseite zur Rückseite erstreckt und dass ausgehend von der Vorderseite im Grundkörper eine Einbauteilaufnahme ausgebildet ist, welche eine Tiefe in Richtung auf die Rückseite hin aufweist, die kleiner ist, als ein Abstand zwischen der Vorderseite und der Rückseite. Die Verwendung einer solchen Abstandshalteeinrichtung ermöglicht es insbesondere, das Einbauteil letztendlich so zu platzieren, dass es teilweise in die Einbauteilaufnahme eintaucht, wobei seine Vorderseite bündig mit der Vorderseite des Grundkörpers ausgerichtet ist. Wird die Vorderseite des Grundkörpers fliesenbündig ausgerichtet, ist folglich auch die Vorderseite des Einbauteils fliesenbündig ausgerichtet.

Die Handhabung der Abstandshalteeinrichtung wird besonders einfach, wenn ein Grundkörper verwendet wird, welcher scheibenförmig oder quaderförmig ausgebildet ist. Insbesondere kann dieser ästhetisch an die zu verarbeitenden Fliesen angepasst sein, insbesondere an deren Material, Oberflächenbeschaffenheit und Farbe.

Günstig ist es, wenn eine Abstandshalteeinrichtung verwendet wird, deren Einbauteilaufnahme sich mindestens abschnittsweise seitlich über die Abstandshalteeinrichtungsdurchbrechung hinaus in den Grundkörper erstreckt. Auf diese Weise wird quasi eine Stufe oder ein Anschlag für das Einbauteil ausgebildet, welcher Anschlag es verhindert, das Einbauteil durch die Abstandshalteeinrichtung hindurchzuschieben. Die Abstandshalteeinrichtung bildet so insbesondere einen Anschlag für das Einbauteil, das beispielsweise mit einem Einbauteileinführabschnitt in das Rohbauteil eingeführt werden kann. Vorteilhaft ist es, wenn eine Abstandshalteeinrichtung verwendet wird, deren Einbauteilaufnahme und deren Abstandshalteeinrichtungsdurchbrechung koaxial zueinander ausgerichtet sind. Dies ermöglicht es insbesondere, ein rotationssymmetrisch oder im Wesentlichen rotationssymmetrisch ausgebildetes Einbauteil mit der Abstandshalteeinrichtung in gewünschter Weise putz- oder fliesenbündig zu positionieren.

Vorzugsweise wird ein Einbauteil verwendet, welches einen Einbauteileinführabschnitt zum Einführen in ein Rohbauteil und einen Einbauteilanschlagabschnitt aufweist, welcher Einbauteilanschlagabschnitt mindestens abschnittsweise seitlich über den Einbauteileinführabschnitt vorsteht. Die Verwendung eines solchen Einbauteils verhindert insbesondere das vollständiges Durchschieben des Einbauteils durch die Anschlageinrichtung hindurch, wenn diese eine Einbauteilaufnahme in der oben beschriebenen Weise aufweist.

Vorteilhafterweise wird ein Einbauteil verwendet, dessen Einbauteilanschlagabschnitt einen in radialer Richtung über den Einbauteileinführabschnitt vorstehenden Flansch umfasst. Ein solcher Flansch kann insbesondere einen Anschlag bilden, welcher mit der Einbauteilaufnahme der Abstandshalteeinrichtung zusammenwirkt, um ein Durchschieben des Einbauteils durch die Abstandshalteeinrichtungsdurchbrechung hindurch zu verhindern.

Besonders günstig ist es, wenn ein Einbauteil verwendet wird, dessen Einbauteilanschlagabschnitt eine Dicke parallel zu einer Einbauteillängsachse des Einbauteils aufweist, welche einer Tiefe der Einbauteilaufnahme entspricht. Wird ein solches Einbauteil insbesondere in der oben beschriebenen Weise eingesetzt, steht seine Vorderfront nicht über die Vorderseite des Grundkörpers hervor. Ist der Grundkörper putz- oder fliesenbündig befestigt, ist damit auch das Einbauteil putz- oder fliesenbündig eingesetzt.

Ferner ist es günstig, wenn zur Durchführung eines der oben beschriebenen vorteilhaften Verfahren eines der oben beschriebenen vorteilhaften Systeme verwendet wird.

Die vorstehende Beschreibung umfasst somit insbesondere die nachfolgend explizit in Form durchnummerierter Sätze aufgeführten Ausführungsformen von Systemen und Verfahren zum putz- oder fliesenbündigen Einbau eines Einbauteils in ein Rohbauteil:
1. System (10) zum putz- oder fliesenbündigen Einbau eines Einbauteils (14) in ein Rohbauteil (16), umfassend eine Montageeinrichtung (40) zum definierten Positionieren einer Abstandshalteeinrichtung (62), welche Montageeinrichtung (40) mindestens teilweise in das Rohbauteil (16) einführbar ist, welche Abstandshalteeinrichtung (40) ausgebildet ist zum putz- oder fliesenbündigen Positionieren einer Vorderseite (98) des Einbauteils (14), welche Abstandshalteeinrichtung (62) eine Abstandshalteeinrichtungsdurchbrechung (68) aufweist, durch welche die Montageeinrichtung (40) formschlüssig oder im Wesentlichen formschlüssig durchführbar ist.
2. System nach Satz 1, dadurch gekennzeichnet, dass die Montageeinrichtung (40) einen Einführabschnitt (44) zum Einführen in das Rohbauteil (16) und einen Führungsabschnitt (46) für die Abstandshalteeinrichtung (62) aufweist.
3. System nach Satz 1 oder 2, dadurch gekennzeichnet, dass der Einführabschnitt (44) ausgebildet ist zum Verschließen des Rohbauteils (16).
4. System nach Satz 2 oder 3, dadurch gekennzeichnet, dass der Einführabschnitt (44) und/oder der Führungsabschnitt (46) einen kreisförmigen oder im Wesentlichen kreisförmigen Querschnitt aufweisen.
5. System nach einem der Sätze 2 bis 4, dadurch gekennzeichnet, dass der Führungsabschnitt (46) einen größeren Querschnitt als der Einführabschnitt (44) aufweist.
6. System nach einem der Sätze 2 bis 5, dadurch gekennzeichnet, dass Längsachsen (22) des Einführabschnitts (44) und des Führungsabschnitts (46) zusammenfallen.
7. System nach einem der voranstehenden Sätze, dadurch gekennzeichnet, dass die Montageeinrichtung (40) eine Werkzeugelementaufnahme (58) umfasst zum in Eingriff Bringen mit einem Entnahmewerkzeug.
8. System nach Satz 7, dadurch gekennzeichnet, dass die Werkzeugelementaufnahme (58) in Form einer Ausnehmung oder Durchbrechung (60) ausgebildet ist.
9. System nach Satz 7 oder 8, dadurch gekennzeichnet, dass die Werkzeugelementaufnahme (58) am Führungsabschnitt (46) angeordnet oder ausgebildet ist.
10. System nach einem der Sätze 7 bis 9, dadurch gekennzeichnet, dass die Werkzeugelementaufnahme (58) eine Längsachse definiert, die quer, insbesondere senkrecht, zur Längsachse (22) des Führungsabschnitts (46) verläuft.
11. System nach einem der Sätze 2 bis 10, dadurch gekennzeichnet, dass die Abstandshalteeinrichtungsdurchbrechung (68) eine Innenkontur aufweist, die der Außenkontur des Führungsabschnitts (46) entspricht.
12. System nach einem der Sätze 2 bis 11, dadurch gekennzeichnet, dass der Führungsabschnitt (46) einen Außendurchmesser (50) aufweist, der einem Innendurchmesser (74) der Abstandshalteeinrichtungsdurchbrechung (68) entspricht.
13. System nach einem der voranstehenden Sätze, dadurch gekennzeichnet, dass die Abstandshalteeinrichtung (62) einen Grundkörper (64) umfasst, welcher eine Vorderseite (70) und eine Rückseite (72) aufweist, dass die Abstandshalteeinrichtungsdurchbrechung (68) sich durch den Grundkörper (64) hindurch von der Vorderseite (70) zur Rückseite (72) erstreckt und dass ausgehend von der Vorderseite (70) im Grundkörper (64) eine Einbauteilaufnahme (76) ausgebildet ist, welche eine Tiefe (78) in Richtung auf die Rückseite (72) hin aufweist, die kleiner ist als ein Abstand (80) zwischen der Vorderseite (70) und der Rückseite (72).
14. System nach Satz 13, dadurch gekennzeichnet, dass der Grundkörper (64) scheibenförmig oder quaderförmig ausgebildet ist.
15. System nach Satz 13 oder 14, dadurch gekennzeichnet, dass sich die Einbauteilaufnahme (76) mindestens abschnittsweise seitlich über die Abstandshalteeinrichtungsdurchbrechung (68) hinaus in den Grundkörper (64) erstreckt.
16. System nach einem der Sätze 13 bis 15, dadurch gekennzeichnet, dass die Einbauteilaufnahme (76) eine Querschnittsfläche aufweist, welche einer Querschnittsfläche der Abstandshalteeinrichtungsdurchbrechung (68) geometrisch ähnlich ist.
17. System nach einem der Sätze 13 bis 16, dadurch gekennzeichnet, dass die Einbauteilaufnahme (76) und die Abstandshalteeinrichtungsdurchbrechung (68) koaxial zueinander ausgerichtet sind.
18. System nach einem der voranstehenden Sätze, gekennzeichnet durch ein Einbauteil (14), welches einen Einbauteileinführabschnitt (128) zum Einführen in ein Rohbauteil (16) und einen Einbauteilanschlagabschnitt (122) aufweist, welcher Einbauteilanschlagabschnitt (122) mindestens abschnittsweise seitlich über den Einbauteileinführabschnitt (128) vorsteht.
19. System nach Satz 18, dadurch gekennzeichnet, dass eine Vorderseite des Einbauteilanschlagabschnitts (122) nicht über die Vorderseite (70) des Grundkörpers (64) vorsteht, wenn eine von der Vorderseite (70) weg in entgegengesetzter Richtung weisende Anschlagfläche (124) des Einbauteilanschlagabschnitts (122) an einer Bodenfläche (84) der Einbauteilaufnahme (76) anliegt, welche in Richtung auf die Anschlagfläche (124) hin weist.
20. System nach Satz 18 oder 19, dadurch gekennzeichnet, dass der Einbauteilanschlagabschnitt (122) einen in radialer Richtung über den Einbauteileinführabschnitt (128) vorstehenden Flansch (90) umfasst.
21. System nach einem der Sätze 18 bis 20, dadurch gekennzeichnet, dass der Einbauteilanschlagabschnitt (122) ein erstes Ende des Einbauteils (14) bildet und/oder dass der Einbauteileinführabschnitt (128) ein zweites Ende des Einbauteils bildet.
22. System nach einem der Sätze 18 bis 21, dadurch gekennzeichnet, dass der Einbauteilanschlagabschnitt (122) eine Dicke (106) parallel zu einer Einbauteillängsachse (22) des Einbauteils (14) aufweist, welche einer Tiefe (78) der Einbauteilaufnahme (76) entspricht.
23. System nach einem der voranstehenden Sätze, dadurch gekennzeichnet, dass die Abstandshalteeinrichtung (62) aus einem Kunststoff, aus einem Metall, insbesondere einem nichtrostenden Stahl, oder aus einer Keramik hergestellt ist.
24. Verfahren zum putz- oder fliesenbündigen Einbau eines Einbauteils (14) in ein in eine Ausnehmung (30) einer Gebäudewand (34) oder eines -bodens eingesetztes Rohbauteil (16), bei welchem Verfahren eine Montageeinrichtung (40) mindestens teilweise in das Rohbauteil (16) eingesetzt wird, wobei ferner eine Abstandshalteeinrichtung (62) bereitgestellt wird, welche eine Abstandshalteeinrichtungsdurchbrechung (68) aufweist, durch welche die Montageeinrichtung (40) formschlüssig oder im Wesentlichen formschlüssig durchführbar ist, wobei die Abstandshalteeinrichtung (62) nach dem mindestens teilweisen Einsetzen der Montageeinrichtung (40) in das Rohbauteil (16) über die Montageeinrichtung (40) an die das Rohbauteil (16) umgebende Gebäudewand (34) oder den -boden herangeführt und an dieser beziehungsweise diesem befestigt wird.
25. Verfahren nach Satz 24, dadurch gekennzeichnet, dass die Abstandshalteeinrichtung (62) umgebend Fliesen (114) an der Gebäudewand (34) angebracht werden.
26. Verfahren nach Satz 25, dadurch gekennzeichnet, dass die Fliesen (114) nach dem Anbringen an der Gebäudewand (34) verfugt werden.
27. Verfahren nach einem der Sätze 24 bis 26, dadurch gekennzeichnet, dass nach dem Befestigen der Abstandshalteeinrichtung (62) an der Gebäudewand (34) die Montageeinrichtung (40) entfernt und das Einbauteil (14) durch die Abstandshalteeinrichtungsdurchbrechung (68) in das Rohbauteil (16) eingeführt wird.
28. Verfahren nach einem der Sätze 24 bis 27, dadurch gekennzeichnet, dass eine Montageeinrichtung (40) verwendet wird, welche einen Einführabschnitt (44) zum Einführen in das Rohbauteil (16) und einen Führungsabschnitt (46) für die Abstandshalteeinrichtung (62) aufweist.
29. Verfahren nach Satz 28, dadurch gekennzeichnet, dass eine Montageeinrichtung (40) verwendet wird, deren Einführabschnitt (44) und/oder deren Führungsabschnitt (46) einen kreisförmigen oder im Wesentlichen kreisförmigen Querschnitt aufweisen.
30. Verfahren nach einem der Sätze 24 bis 29, dadurch gekennzeichnet, dass eine Montageeinrichtung (40) mit einer Werkzeugelementaufnahme (58) zum in Eingriff Bringen mit einem Entnahmewerkzeug verwendet wird.
31. Verfahren nach Satz 30, dadurch gekennzeichnet, dass eine Montageeinrichtung (40) mit einer Werkzeugelementaufnahme (58) in Form einer Ausnehmung oder Durchbrechung (60) verwendet wird.
32. Verfahren nach Satz 30 oder 31, dadurch gekennzeichnet, dass eine Montageeinrichtung (40) mit einer am Führungsabschnitt (46) angeordneten oder ausgebildeten Werkzeugelementaufnahme (58) verwendet wird.
33. Verfahren nach einem der Sätze 24 bis 32, dadurch gekennzeichnet, dass eine Abstandshalteeinrichtung (62) mit einem Grundkörper (64) verwendet wird, welcher eine Vorderseite (70) und eine Rückseite (72) aufweist, dass die Abstandshalteeinrichtungsdurchbrechung (68) sich durch den Grundkörper (64) hindurch von der Vorderseite (70) zur Rückseite (72) erstreckt und dass ausgehend von der Vorderseite (70) im Grundkörper (64) eine Einbauteilaufnahme (58) ausgebildet ist, welche eine Tiefe (78) in Richtung auf die Rückseite (72) hin aufweist, die kleiner ist als ein Abstand (80) zwischen der Vorderseite (70) und der Rückseite (72).
34. Verfahren nach Satz 33, dadurch gekennzeichnet, dass ein Grundkörper (64) verwendet wird, welcher scheibenförmig oder quaderförmig ausgebildet ist.
35. Verfahren nach Satz 33 oder 34, dadurch gekennzeichnet, dass eine Abstandshalteeinrichtung (62) verwendet wird, deren Einbauteilaufnahme (76) sich mindestens abschnittsweise seitlich über die Abstandshalteeinrichtungsdurchbrechung (68) hinaus in den Grundkörper (64) erstreckt.
36. Verfahren nach einem der Sätze 24 bis 35, dadurch gekennzeichnet, dass eine Abstandshalteeinrichtung (62) verwendet wird, deren Einbauteilaufnahme (76) und deren Abstandshalteeinrichtungsdurchbrechung (68) koaxial zueinander ausgerichtet sind.
37. Verfahren nach einem der Sätze 24 bis 36, dadurch gekennzeichnet, dass ein Einbauteil (14) verwendet wird, welches einen Einbauteileinführabschnitt (128) zum Einführen in ein Rohbauteil (16) und einen Einbauteilanschlagabschnitt (122) aufweist, welcher Einbauteilanschlagabschnitt (122) mindestens abschnittsweise seitlich über den Einbauteileinführabschnitt (128) vorsteht.
38. Verfahren nach Satz 37, dadurch gekennzeichnet, dass ein Einbauteil (14) verwendet wird, dessen Einbauteilanschlagabschnitt (122) einen in radialer Richtung über den Einbauteileinführabschnitt (128) vorstehenden Flansch (90) umfasst.
39. Verfahren nach Satz 37 oder 38, dadurch gekennzeichnet, dass ein Einbauteil (14) verwendet wird, dessen Einbauteilanschlagabschnitt (122) eine Dicke (106) parallel zu einer Einbauteillängsachse (22) des Einbauteils (14) aufweist, welche einer Tiefe (78) der Einbauteilaufnahme (76) entspricht.
40. Verfahren nach einem der Sätze 24 bis 39, dadurch gekennzeichnet, dass zur Durchführung des Verfahrens ein System (10) nach einem der Sätze 1 bis 23 verwendet wird.

Die nachfolgende Beschreibung bevorzugter Ausführungsformen der Erfindung dient im Zusammenhang mit den Zeichnungen der näheren Erläuterung. Es zeigen:
- Figur 1:: eine Schnittansicht eines in eine Gebäudewand eingesetzten Rohbauteils mit einer Montageeinrichtung vor Einsetzen derselben in das Rohbauteil;
- Figur 2:: eine Ansicht ähnlich Figur 1 vor dem Einsetzen einer Abstandshalteeinrichtung;
- Figur 3:: eine perspektivische, teilweise geschnittene Ansicht einer Abstandshalteeinrichtung vor dem Positionieren derselben mit Hilfe der Montageeinrichtung;
- Figur 4:: eine Längsschnittansicht einer relativ zum Rohbauteil befestigten Abstandshalteeinrichtung mit diese umgebenden Fliesen;
- Figur 5:: eine perspektivische, teilweise geschnittene Ansicht eines Rohbauteils, einer Abstandshalteeinrichtung sowie eines Einbauteils;
- Figur 6:: eine Schnittansicht ähnlich Figur 4, jedoch mit eingesetztem Einbauteil;
- Figur 7:: eine Draufsicht in Richtung des Pfeils B in Figur 6; und
- Figur 8:: eine Schnittansicht ähnlich Figur 6, jedoch mit einem alternativen Ausführungsbeispiel einer Abstandshalteeinrichtung.

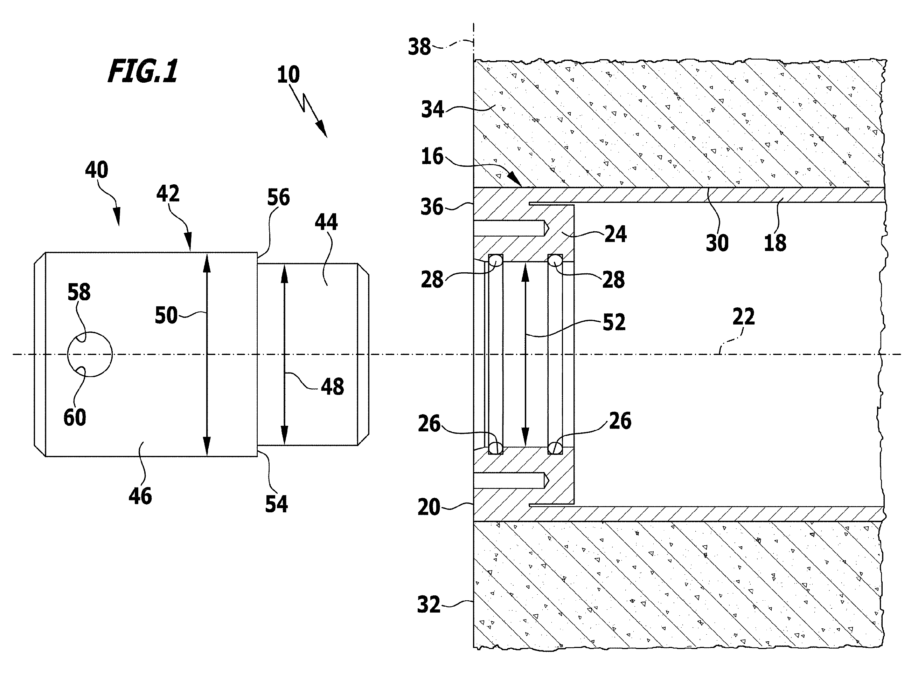

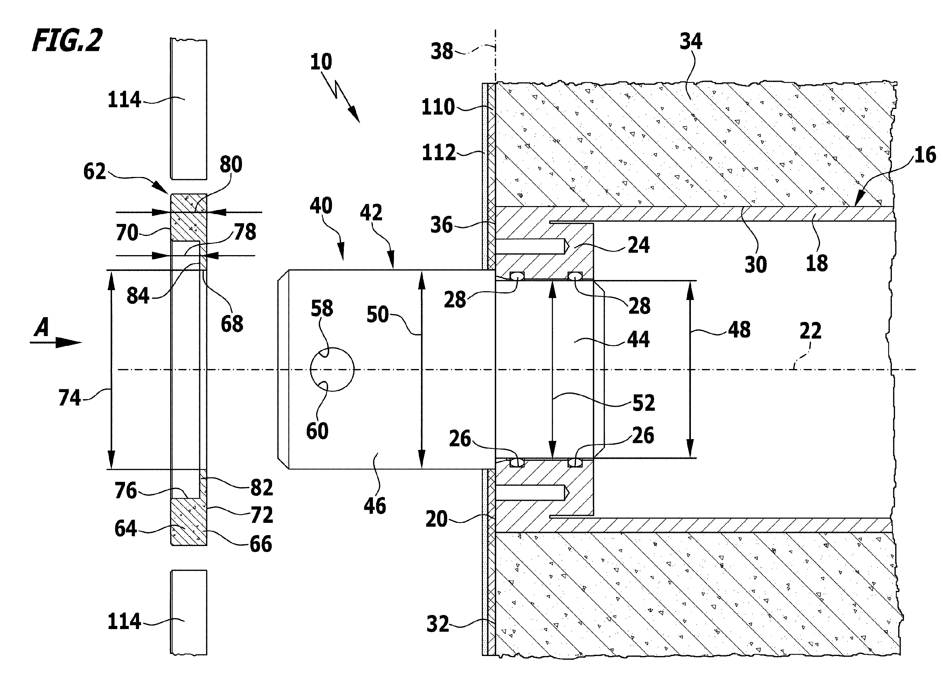

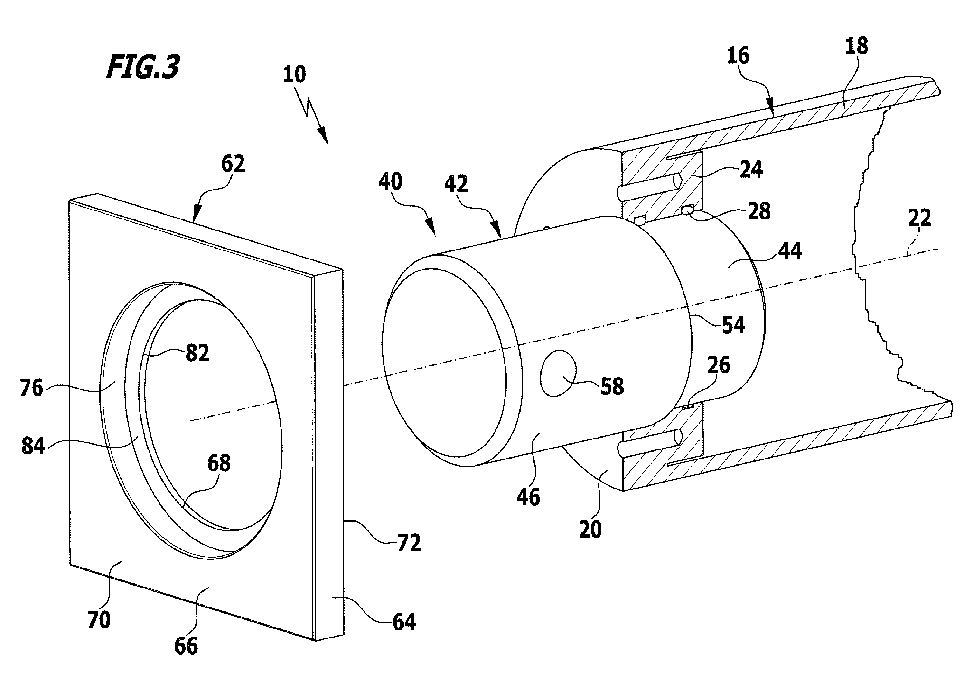

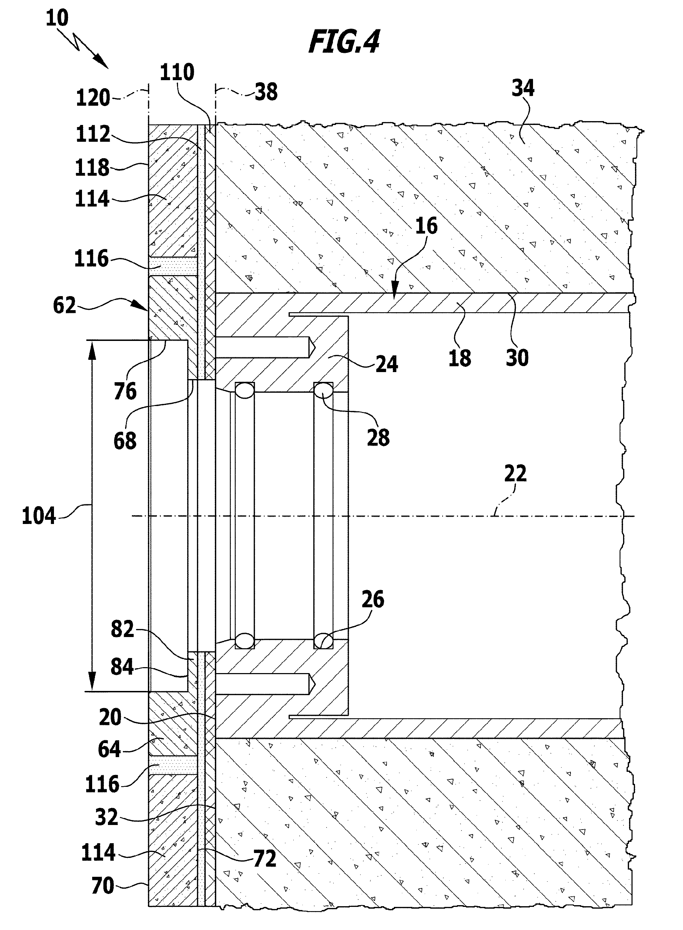

In den Figuren 1 bis 4 ist schematisch ein insgesamt mit dem Bezugszeichen 10 bezeichnetes System zum putz- oder fliesenbündigen Einbau eines Einbauteils 14 in ein Rohbauteil 16 dargestellt. Das Rohbauteil 16 umfasst eine Hülse 18, die an ihrem einen Ende 20 einen in Richtung auf eine von der Hülse 18 definierte Längsachse 22 hin weisenden Ringflansch 24 aufweist, welcher zwei in Richtung auf die Längsachse 22 hin und diese konzentrisch umgebende Ringnuten 26 aufweist, in welche jeweils ein Dichtring 28 eingesetzt ist.

Das Rohbauteil 16 wird in eine beispielsweise hohlzylindrische Gebäudeausnehmung 30 eingesetzt, und zwar derart, dass das Ende 20 bündig mit einer Wand- oder Bodenfläche 32 einer Wand 34 oder eines Bodens eines Gebäudes oder eines in diesem angeordneten Baukörpers, beispielsweise eines Schwimmbeckens, ausgerichtet ist. Die Wandfläche 32 sowie eine Vorderseite 36 des Rohbauteils 16 definieren damit eine Ebene 38.

Zum temporären Verschließen des Rohbauteils 16 dient eine Montageeinrichtung 40, welche in Form eines Stopfens 42 ausgebildet ist. Dieser umfasst einen zylindrischen Einführabschnitt 44 und einen sich an diesen anschließenden, weiteren zylindrischen Führungsabschnitt 46. Ein Außendurchmesser 48 des Einführabschnitts 44 ist kleiner als ein Außendurchmesser 50 des Führungsabschnitts 46. Der Außendurchmesser 48 ist etwas kleiner als ein Innendurchmesser des Ringflanschs 24, so dass der Einführabschnitt 44 in den Ringflansch 24 eingeführt werden kann, wobei die Dichtringe 28 dabei zusammengedrückt werden und die Montageeinrichtung 40 auf diese Weise klemmend im Rohbauteil 16 gehalten wird. Die Montageeinrichtung 40 kann nur bis zum Rücksprung 54 am Übergang vom Einführabschnitt 44 zum Führungsabschnitt 46 und einer vom Rücksprung 54 in Richtung auf das Rohbauteil 16 hin weisenden Ringfläche 56 in den Ringflansch 24 eingeschoben werden, also bis die Ringfläche 56 am Ende 20 anschlägt.

Die Montageeinrichtung 40 weist optional eine Werkzeugelementaufnahme 58 auf, welche vorzugsweise am Führungsabschnitt 46 ausgebildet ist. Bei dem in den Figuren dargestellten Ausführungsbeispiel einer Montageeinrichtung 40 ist die Werkzeugelementaufnahme 58 in Form einer Durchgangsbohrung 60 ausgebildet, deren Längsachse die Längsachse 22 senkrecht schneidet. Die Werkzeugelementaufnahme ist vorgesehen zum in Eingriff Bringen mit einem in den Figuren nicht dargestellten Entnahmewerkzeug, welches beispielsweise zwei relativ zueinander bewegliche Backen aufweisen kann, welche jeweils einen Vorsprung tragen, der in die Durchgangsbohrung 60 einführbar ist. Auf diese Weise kann die Montageeinrichtung 40 einfach und sicher wieder aus dem Rohbauteil 16 herausgezogen werden.

Die Funktion der Montageeinrichtung 40 besteht jedoch insbesondere nicht nur darin, das Rohbauteil 16 temporär zu verschließen, sondern optional auch zur einfachen Positionierung einer Abstandshalteeinrichtung 62 relativ zum Rohbauteil 16. Die Abstandshalteeinrichtung 62 weist einen Grundkörper 64 auf, welcher in Form eines flachen Quaders 66 ausgebildet ist. Die Abstandshalteeinrichtung 62 weist eine Abstandshalteeinrichtungsdurchbrechung 68 auf, die sich durch den Grundkörper 64 hindurch von einer Vorderseite 70 zu einer Rückseite 72 erstreckt. Ein Innendurchmesser 74 der Abstandshalteeinrichtungsdurchbrechung 68 ist an den Außendurchmesser 50 des Führungsabschnitts 46 angepasst, so dass die Abstandshalteeinrichtung 62 vorzugsweise spielfrei, jedoch ohne zu verklemmen, über den Führungsabschnitt 46 geschoben werden kann. Vorzugsweise weist die Abstandshalteeinrichtungsdurchbrechung 68 eine Innenkontur auf, die der Außenkontur des Führungsabschnitts 46 entspricht.

Des Weiteren ist an der Abstandshalteeinrichtung 62 eine Einbauteilaufnahme 76 ausgebildet, und zwar ausgehend von der Vorderseite 70. Die Einbauteilaufnahme weist eine Tiefe 78 in Richtung auf die Rückseite 72 hin auf, die kleiner ist als eine Dicke 80 des Grundkörpers 64, also kleiner als ein Abstand zwischen der Vorderseite 70 und der Rückseite 72.

Die Einbauteilaufnahme 76 erstreckt sich seitlich über die Abstandshalteeinrichtungsdurchbrechung 68 hinaus in den Grundkörper 64 hinein. Mit anderen Worten wird die Abstandshalteeinrichtungsdurchbrechung 68 von einem Ringflansch 82 begrenzt, welcher in Richtung auf die Längsachse 22 hin weist. Der Ringflansch 82 weist somit eine von der Rückseite 72 weg weisende ringförmige Anschlagfläche 84 auf, die die Bauteilaufnahme 76 zur Rückseite 72 hin begrenzt.

Das Einbauteil 14 umfasst beispielsweise eine einen Einbauteileinführabschnitt 128 definierende Hülse 86, welche an ihrem vorderen Ende mit einer scheibenförmigen Platte 88 verschlossen ist, die in radialer Richtung über die Hülse 86 von der Längsachse 22 weg weisend vorsteht. Sie bildet somit zum Teil einen Ringflansch 90 aus. Von einem äußeren Rand 92 des Ringflanschs 90, also von einer Rückseite 96 der Platte 88, steht konzentrisch zur Hülse 86 ein kurzer hülsenförmiger Abschnitt 94 ab. Von einer Vorderseite 98 erstreckt sich durch die Platte 88 hindurch eine kreisförmige Öffnung 100 zur Rückseite 96 hin. Ein Außendurchmesser 102 des Abschnitts 94 ist etwas kleiner als ein Innendurchmesser 104 der Einbauteilaufnahme 76. Eine Dicke 106 der Platte entspricht der Tiefe 78 der Einbauteilaufnahme 76.

Ein Außendurchmesser 108 der Hülse 86 entspricht dem Außendurchmesser 48, so dass das Einbauteil 14 mittels der Dichtringe 28 dichtend in das Rohbauteil 16 einschiebbar ist.

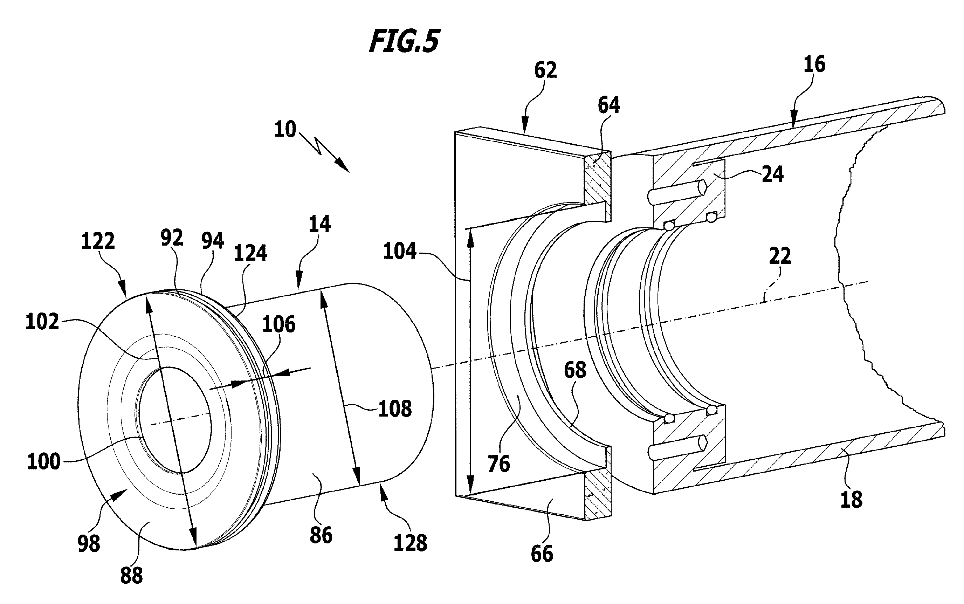

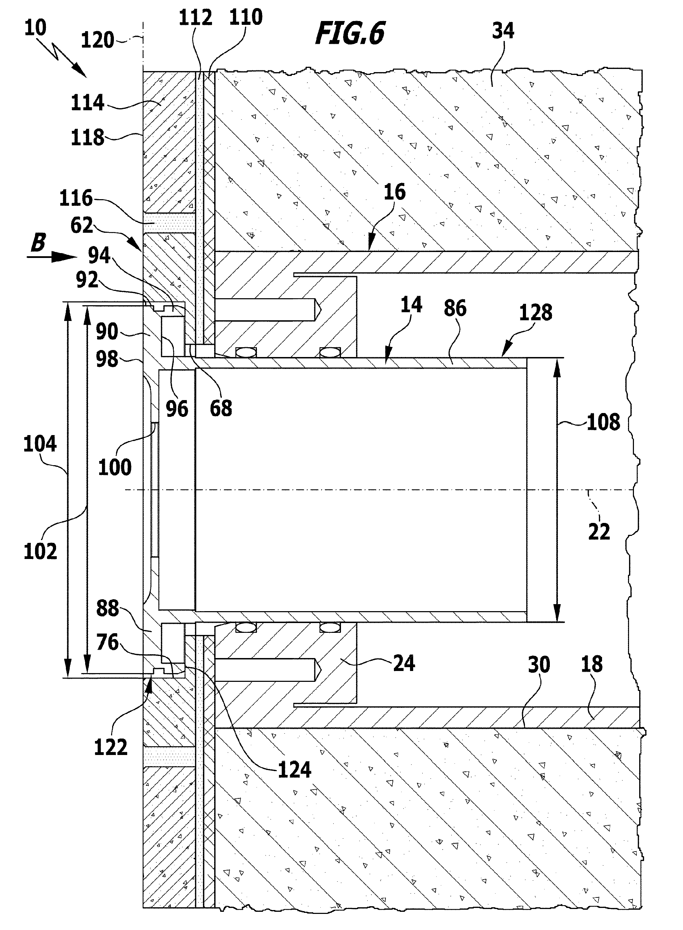

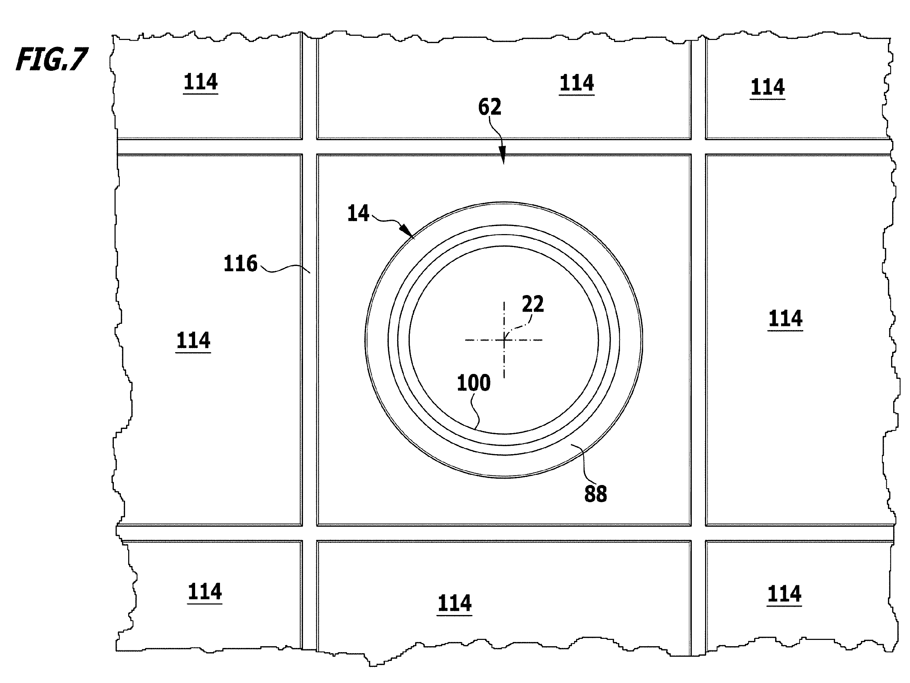

Die Funktionsweise sowie der Einbau des Systems 12 werden nachfolgend in Verbindung mit den Figuren 1 bis 7 näher erläutert.

In einem ersten Schritt wird das Rohbauteil 16 in die Gebäudeausnehmung 30 eingesetzt und darin fixiert. Danach wird die Montageeinrichtung 40 mit dem Einführabschnitt 44 in den Ringflansch 24 eingeführt, um das Rohbauteil 16 dichtend zu verschließen.

Danach kann optional auf der Wandfläche 32 ein Putz oder Estrich 110 aufgebracht werden. In einem nächsten Schritt wird der Putz beziehungsweise Estrich 110 mit einem Fliesenkleber 112 beaufschlagt.

Anschließend wird die Abstandshalteeinrichtung 62 über den Führungsabschnitt 46 geführt und in das Bett aus Fliesenkleber 112 gedrückt. Nun können Fliesen 114 um die Abstandshalteeinrichtung 62 herum aufgeklebt werden. Danach werden Fugen 116 zwischen den Fliesen 114 und der Abstandshalteeinrichtung 62 verfugt.

Zuletzt wird das Einbauteil 14 in der beschriebenen Weise mit der Hülse 86 voran durch die Abstandshalteeinrichtungsdurchbrechung 68 hindurch in das Rohbauteil 16 eingeschoben, und zwar bis der Abschnitt 94 am Ringflansch 82 anschlägt. Aufgrund der beschriebenen Abmessungen der Abstandshalteeinrichtung 62 sowie der Platte 88 und des Abschnitts 94, die zusammen ein erstes Ende des Einbauteils 14 bilden, liegen die Vorderseite 90 und Vorderseiten 118 der Fliesen 114 in einer gemeinsamen Ebene 120. Das Einbauteil 14 ist damit fliesenbündig in das Rohbauteil 16 eingebaut. Die gewünschte Passgenauigkeit wird insbesondere dadurch realisiert, dass der Ringflansch 82 einen Anschlag für den Abschnitt 94 bildet, so dass die Vorderseite 98 eines Einbauteilanschlagabschnitts 122, welcher den Ringflansch 90 sowie den Abschnitt 94 umfasst, nicht über die Vorderseite 70 des Grundkörpers 64 vorsteht wenn eine ringförmige, auf den Ringflansch 82 hin weisende Anschlagfläche 124 des Abschnitts 94 am Ringflansch 82 anliegt. Der Einbauteilanschlagabschnitt 122 steht somit mindestens abschnittsweise seitlich über den Einbauteileinführabschnitt 128 vor.

Wie bereits eingangs erwähnt, kann das Einbauteil 14 Schaltelemente oder Beleuchtungselemente umfassen, oder auch schlicht als ein Abfluss, beispielsweise eines Schwimmbeckens, ausgebildet sein.

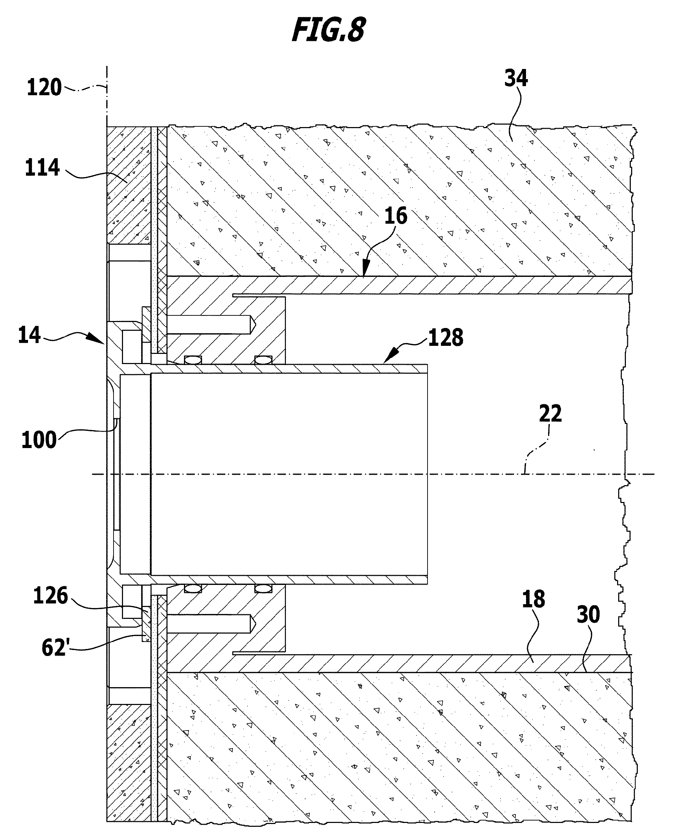

Eine zweite, alternative Ausführungsform einer Abstandshalteeinrichtung 62', die anstelle der Abstandshalteeinrichtung 62 eingesetzt werden kann, ist schematisch in Figur 8 dargestellt. Die Abstandshalteeinrichtung 62' ist ausgebildet in Form einer flachen Kreisrings 126, welcher eine Dicke aufweist, die einer Dicke des Ringflansch 82 entspricht. Ein Innendurchmesser des Kreisrings 126 entspricht dem Innendurchmesser 74. Damit ist es möglich, die Abstandshalteeinrichtung 62' in analoger Weise wie die Abstandhalteeinrichtung 62 über den Führungsabschnitt 46 der Montageeinrichtung 40 zu schieben, wenn diese in das Rohbauteil 16 in der oben beschriebenen Weise eingesetzt ist. Die Dicke 106 du eine Dicke des Kreisrings 126 entsprechen vorzugsweise einer Dicke der Fliesen 114, so dass es ebenfalls möglich ist, das Einbauteil 14 mittels der Abstandshalteeinrichtung 62' fliesenbündig wie in Figur 8 schematisch dargestellt in das Rohbauteil 16 einzubauen.

Die Montageeinrichtungen 62 und 62' können insbesondere aus einem Kunststoff, einem Metall, vorzugsweise einem nichtrostenden Stahl, oder auch aus einer Keramik hergestellt sein. Insbesondere ist es denkbar, die Montageeinrichtung 62 in Form einer besonders geformten Fliese auszubilden, so dass insgesamt ein einheitliches Fliesenbild entstehen kann.

## Patentansprüche

1. System (10) zum putz- oder fliesenbündigen Einbau eines Einbauteils (14) in ein Rohbauteil (16), umfassend eine Montageeinrichtung (40) zum definierten Positionieren einer Abstandshalteeinrichtung (62), welche Montageeinrichtung (40) mindestens teilweise in das Rohbauteil (16) einführbar ist, welche Abstandshalteeinrichtung (40) ausgebildet ist zum putz- oder fliesenbündigen Positionieren einer Vorderseite (98) des Einbauteils (14), welche Abstandshalteeinrichtung (62) eine Abstandshalteeinrichtungsdurchbrechung (68) aufweist, durch welche die Montageeinrichtung (40) formschlüssig oder im Wesentlichen formschlüssig durchführbar ist.

2. System nach Anspruch 1, **dadurch gekennzeichnet, dass** die Montageeinrichtung (40) einen Einführabschnitt (44) zum Einführen in das Rohbauteil (16) und einen Führungsabschnitt (46) für die Abstandshalteeinrichtung (62) aufweist.

3. System nach Anspruch 1 oder 2, **dadurch gekennzeichnet, dass** der Einführabschnitt (44) ausgebildet ist zum Verschließen des Rohbauteils (16).

4. System nach einem der voranstehenden Ansprüche, **dadurch gekennzeichnet, dass** die Montageeinrichtung (40) eine Werkzeugelementaufnahme (58) umfasst zum in Eingriff Bringen mit einem Entnahmewerkzeug.

5. System nach einem der Ansprüche 2 bis 4, **dadurch gekennzeichnet, dass** die Abstandshalteeinrichtungsdurchbrechung (68) eine Innenkontur aufweist, die der Außenkontur des Führungsabschnitts (46) entspricht.

6. System nach einem der Ansprüche 2 bis 5, **dadurch gekennzeichnet, dass** der Führungsabschnitt (46) einen Außendurchmesser (50) aufweist, der einem Innendurchmesser (74) der Abstandshalteeinrichtungsdurchbrechung (68) entspricht.

7. System nach einem der voranstehenden Ansprüche, **dadurch gekennzeichnet, dass** die Abstandshalteeinrichtung (62) einen Grundkörper (64) umfasst, welcher eine Vorderseite (70) und eine Rückseite (72) aufweist, dass die Abstandshalteeinrichtungsdurchbrechung (68) sich durch den Grundkörper (64) hindurch von der Vorderseite (70) zur Rückseite (72) erstreckt und dass ausgehend von der Vorderseite (70) im Grundkörper (64) eine Einbauteilaufnahme (76) ausgebildet ist, welche eine Tiefe (78) in Richtung auf die Rückseite (72) hin aufweist, die kleiner ist als ein Abstand (80) zwischen der Vorderseite (70) und der Rückseite (72).

8. System nach einem der voranstehenden Ansprüche, **gekennzeichnet durch** ein Einbauteil (14), welches einen Einbauteileinführabschnitt (128) zum Einführen in ein Rohbauteil (16) und einen Einbauteilanschlagabschnitt (122) aufweist, welcher Einbauteilanschlagabschnitt (122) mindestens abschnittsweise seitlich über den Einbauteileinführabschnitt (128) vorsteht.

9. Verfahren zum putz- oder fliesenbündigen Einbau eines Einbauteils (14) in ein in eine Ausnehmung (30) einer Gebäudewand (34) oder eines -bodens eingesetztes Rohbauteil (16), bei welchem Verfahren eine Montageeinrichtung (40) mindestens teilweise in das Rohbauteil (16) eingesetzt wird, wobei ferner eine Abstandshalteeinrichtung (62) bereitgestellt wird, welche eine Abstandshalteeinrichtungsdurchbrechung (68) aufweist, durch welche die Montageeinrichtung (40) formschlüssig oder im Wesentlichen formschlüssig durchführbar ist, wobei die Abstandshalteeinrichtung (62) nach dem mindestens teilweisen Einsetzen der Montageeinrichtung (40) in das Rohbauteil (16) über die Montageeinrichtung (40) an die das Rohbauteil (16) umgebende Gebäudewand (34) oder den -boden herangeführt und an dieser beziehungsweise diesem befestigt wird.

10. Verfahren nach Anspruch 9, **dadurch gekennzeichnet, dass** nach dem Befestigen der Abstandshalteeinrichtung (62) an der Gebäudewand (34) die Montageeinrichtung (40) entfernt und das Einbauteil (14) durch die Abstandshalteeinrichtungsdurchbrechung (68) in das Rohbauteil (16) eingeführt wird.

11. Verfahren nach Anspruch 9 oder 10, **dadurch gekennzeichnet, dass** eine Montageeinrichtung (40) verwendet wird, welche einen Einführabschnitt (44) zum Einführen in das Rohbauteil (16) und einen Führungsabschnitt (46) für die Abstandshalteeinrichtung (62) aufweist.

12. Verfahren nach einem der Ansprüche 9 bis 11, **dadurch gekennzeichnet, dass** eine Montageeinrichtung (40) mit einer Werkzeugelementaufnahme (58) zum in Eingriff Bringen mit einem Entnahmewerkzeug verwendet wird.

13. Verfahren nach einem der Ansprüche 9 bis 12, **dadurch gekennzeichnet, dass** eine Abstandshalteeinrichtung (62) mit einem Grundkörper (64) verwendet wird, welcher eine Vorderseite (70) und eine Rückseite (72) aufweist, dass die Abstandshalteeinrichtungsdurchbrechung (68) sich durch den Grundkörper (64) hindurch von der Vorderseite (70) zur Rückseite (72) erstreckt und dass ausgehend von der Vorderseite (70) im Grundkörper (64) eine Einbauteilaufnahme (58) ausgebildet ist, welche eine Tiefe (78) in Richtung auf die Rückseite (72) hin aufweist, die kleiner ist als ein Abstand (80) zwischen der Vorderseite (70) und der Rückseite (72).

14. Verfahren nach einem der Ansprüche 9 bis 13, **dadurch gekennzeichnet, dass** ein Einbauteil (14) verwendet wird, welches einen Einbauteileinführabschnitt (128) zum Einführen in ein Rohbauteil (16) und einen Einbauteilanschlagabschnitt (122) aufweist, welcher Einbauteilanschlagabschnitt (122) mindestens abschnittsweise seitlich über den Einbauteileinführabschnitt (128) vorsteht.

15. Verwendung eines Systems (10) nach einem der Ansprüche 1 bis 8 zur Durchführung eines Verfahren nach einem der Ansprüche 9 bis 14.
